(19) **Europäisches Patentamt / European Patent Office / Office européen des brevets**

(11) **EP 2 487 119 A1**

(12) **EUROPEAN PATENT APPLICATION**
published in accordance with Art. 153(4) EPC

(43) Date of publication:
**15.08.2012 Bulletin 2012/33**

(51) Int Cl.:
**B65D 75/36** (2006.01)  **G06K 19/06** (2006.01)
**G09F 3/00** (2006.01)

(21) Application number: **10754648.3**

(22) Date of filing: **12.03.2010**

(86) International application number:
**PCT/JP2010/001780**

(87) International publication number:
**WO 2011/043005 (14.04.2011 Gazette 2011/15)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.10.2009 JP 2009235117**

(71) Applicant: **Panasonic Corporation
Osaka 540-6207 (JP)**

(72) Inventors:
• **FUJIWARA, Michiko
Shiromi 2-chome, Chuo-ku, Osaka-shi,
Oasaka 540-6207 (JP)**
• **SYOJI, Yasuhiko
Shiromi 2-chome, Chuo-ku, Osaka-shi,
Oasaka 540-6207 (JP)**

(74) Representative: **Grünecker, Kinkeldey,
Stockmair & Schwanhäusser
Leopoldstrasse 4
80802 München (DE)**

(54) **BLISTER PACK FOR BATTERY AND METHOD FOR PRODUCING SAME**

(57)    A barcode (4) is formed on a cardboard (2) by laser marking, and a groove (22) communicating a space (42) in the barcode (4) is formed in the cardboard (2). The groove (22) has a depth which is 1/7 or more of an error in resolution of a barcode reader.

FIG.2

**Description**

TECHNICAL FIELD

The present disclosure relates to battery blister packs for housing batteries using aqueous solutions as electrolytes, and methods for fabricating the packs.

BACKGROUND ART

Dry batteries and rechargeable batteries as substitutes for dry batteries are sold in the state of being housed in blister packs in stores such as supermarkets and convenience stores. The blister pack is made of a cover and a cardboard. A battery is housed in space defined by the inner surface of the cover and the front surface of the cardboard. The front surface of the cardboard shows a message encouraging buying motivation of customers or performance of the battery. A barcode indicating information such as production information, distribution information, and sales information on the battery is printed on the front or back surface of the cardboard. Information recorded on the barcode is read by a dedicated reader at a cash register, and thereby, payment is finished and purchase information is recorded on the barcode.

If the barcode is soiled or broken, payment is not finished, thereby causing inconvenience to customers. To prevent this problem, various efforts have been made on battery packages including blister packs. PATENT DOCUMENT 1 describes that covering a label (i.e., a barcode) with a heat-shrinkable film having a transparent or semitransparent portion can prevent soiling and breakage of the label.

To form barcodes, ink printing (similar to the technique of forming figures, characters, or the like on the surface of a cardboard of a blister pack) is conventionally employed in general. Ink printing is a printing technique using, for example, an ultra violet (UV) ink. Examples of ink printing include offset printing, relief printing, and gravure printing. Among these techniques, offset printing costs the least, and thus, is principally employed to form barcodes.

Specifically, if soiling and breakage of a barcode formed by ink printing on the front or back surface of a cardboard of a blister pack is prevented, batteries can be distributed with satisfaction of customers.

CITATION LIST

PATENT DOCUMENT

PATENT DOCUMENT 1: Japanese Patent Publication No. 10-194244

SUMMARY OF THE INVENTION

TECHNICAL PROBLEM

However, conventional blister packs configured based on the above-described attempts provides disadvantages to customers when unexpected problems arise in batteries. Specifically, when a battery is broken, an electrolyte leaks from the battery. Since the battery showing leakage of the electrolyte cannot assure customers of satisfactory performance and quality, it is preferable to prevent such batteries from being distributed to customers. However, even when an electrolyte leaks from a battery housed in a blister pack, a barcode printed on this blister pack is recognized by a barcode reader. Accordingly, the battery showing leakage of the electrolyte is sold to customers unless a customer or store staff notices the electrolyte leakage.

It is therefore an object of the present invention to provide a battery blister pack which allows payment of a battery when a battery is not broken, while preventing the battery from being sold to customers when the battery is broken.

SOLUTION TO THE PROBLEM

As a result of an intensive study, inventors of the present invention have reached an idea that if a barcode positively reflects leakage of an electrolyte, it is possible to prevent a battery showing electrolyte leakage from being sold to customers. Specifically, according to the present invention, an electrolyte leaked from a battery causes a barcode to deform to such a degree in which the electrolyte leaked from the battery prevents the barcode from being read by a barcode reader. The following description includes phrases of "to deform a barcode" and "a barcode deforms" not specifying the degree of deformation. Even in the case of omitting the degree of deformation, the phrase of "to deform a barcode" means deforming the barcode to a degree in which reading by a barcode reader is impossible, and the phrase of "a barcode deforms" means that the barcode deforms to a degree in which reading by the barcode reader is impossible.

More specifically, in a battery blister pack according to the present invention, a barcode is formed on a cardboard by laser marking, a groove communicating with a space in the barcode is formed in the cardboard, and the groove has a depth which is 1/7 or more of an error in resolution of the barcode reader.

In such a battery blister pack, when the electrolyte does not leak from the battery, the barcode is recognized by the barcode reader.

On the other hand, when the electrolyte leaks from the battery, the electrolyte leaked from the battery is stored in the groove. Thus, a portion of the cardboard located immediately under a printed portion of the barcode swells in the electrolyte, and thereby, the barcode deforms.

In the battery blister pack, the depth of the groove may be 1.5 times or less as large as an error in resolution of the barcode reader. With this configuration, it is possible to prevent the cardboard from being discolored by laser light.

Preferably, in the battery blister pack, the cardboard includes an inner layer and a surface layer in which the groove is formed, and the surface layer more easily swells in the electrolyte than the inner layer. In this configuration, the barcode is easily deformed by the electrolyte leaked from the battery.

In the battery blister pack, the cover may be made of resin, and the cover may have a water vapor transmission rate of 1.0 $(g/(m^2 \cdot 24hr))$ or more. In this configuration, the electrolyte leaked from the battery is hard to dry, and is easily absorbed in the cardboard.

In the battery blister pack, the barcode may be formed on a second surface of the cardboard opposite to the first surface of the cardboard. In this case, if the cardboard includes a layer of recycled paper, electrolyte leaked from the battery easily permeates from the first surface to the second surface in the cardboard.

In the battery blister pack, the barcode is preferably located at a distance of 2 cm or less outside from an edge of a region of the cardboard where the battery is disposed. With this configuration, even when the amount of the electrolyte leaked from the battery is small, the barcode deforms.

Preferably, in the battery blister pack, the cardboard has a hanging opening, and the cover is fixed to a portion of the cardboard located below the hanging opening and above the barcode. When the battery blister pack housing the battery is hanged for display, the electrolyte leaked from the battery flows to the barcode by gravity.

In a method for fabricating a battery blister pack according to the present invention, an ink layer is first formed on a portion of the cardboard, and then, part of the ink layer is removed by laser marking, thereby forming a barcode. In the step of forming the barcode, a groove communicating with a space in the barcode is formed in the cardboard, and the groove has a depth which is 1/7 or more of an error in resolution of a barcode reader.

A "space in a barcode" herein is an unprinted portion of the barcode (i.e., white elements in a barcode symbol), and a "bar in the barcode" herein is a printed portion of the barcode (i.e., dark elements in the barcode symbol).

The "water vapor transmission rate" herein is an index indicating the degree of the transmission rate of water vapor through a material forming the cover, and is measured in conformity with JIS Z 0208 under conditions in which the temperature is 25°C and the relative humidity is 90%RH (relative humidity).

ADVANTAGES OF THE INVENTION

According to the present invention, payment for a battery can be performed with a barcode recognized by a barcode reader when the battery is not broken, while preventing the battery from being sold to customers when the battery is broken.

BRIEF DESCRIPTION OF THE DRAWINGS

[FIG. 1] FIG. 1(a) is a perspective view of a battery blister pack according to an embodiment of the present invention when viewed from the front of the battery blister pack. FIG. 1(b) is a cross-sectional view taken along line IB-IB in FIG. 1(a). FIG. 1(c) is a plan view of the battery blister pack when viewed from the back of the battery blister pack.
[FIG. 2] FIGS. 2(a)-2(c) are cross-sectional views showing process steps of forming a barcode by laser marking in the order of fabrication.
[FIG. 3] FIG. 3 is a cross-sectional view showing a state of the barcode when leakage of an electrolyte occurs.
[FIG. 4] FIGS. 4(a) and 4(b) are cross-sectional views showing process steps of forming a barcode by ink printing in the order of fabrication.
[FIG. 5] FIG. 5 is a table showing results of Example A.
[FIG. 6] FIGS. 6(a)-6(c) are a cross-sectional view, a rear view, and a front view, respectively, of a blister pack used in Example B.
[FIG. 7] FIG. 7 is a table showing results of Example B.

DESCRIPTION OF EMBODIMENTS

An embodiment of the present invention will be described in detail hereinafter with reference to the drawings. It should be noted that the present invention is not limited to the following embodiment. In the following description, like reference characters can be used to designate identical or equivalent elements.

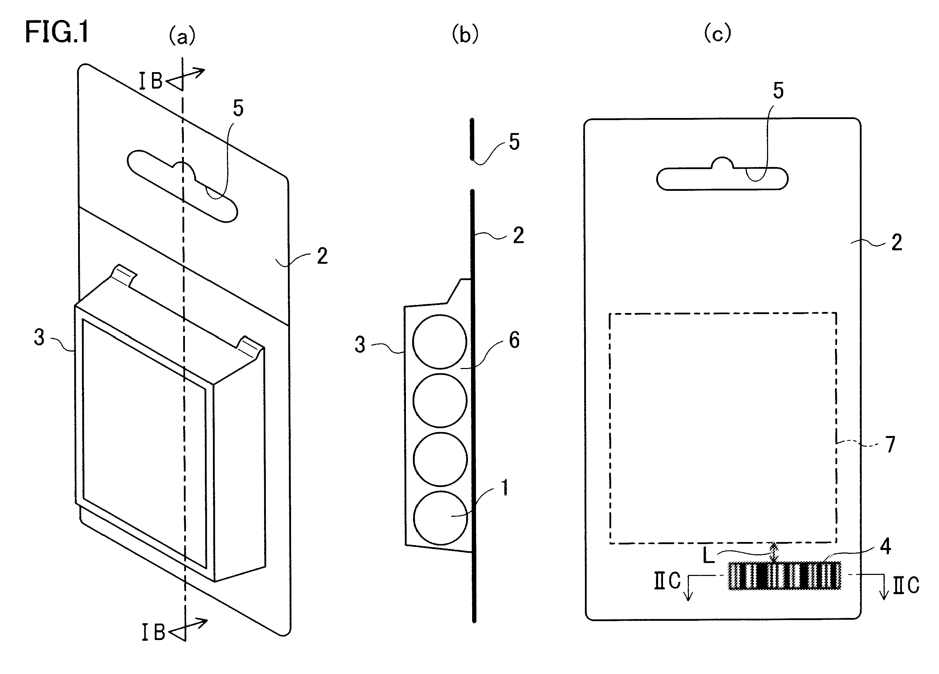

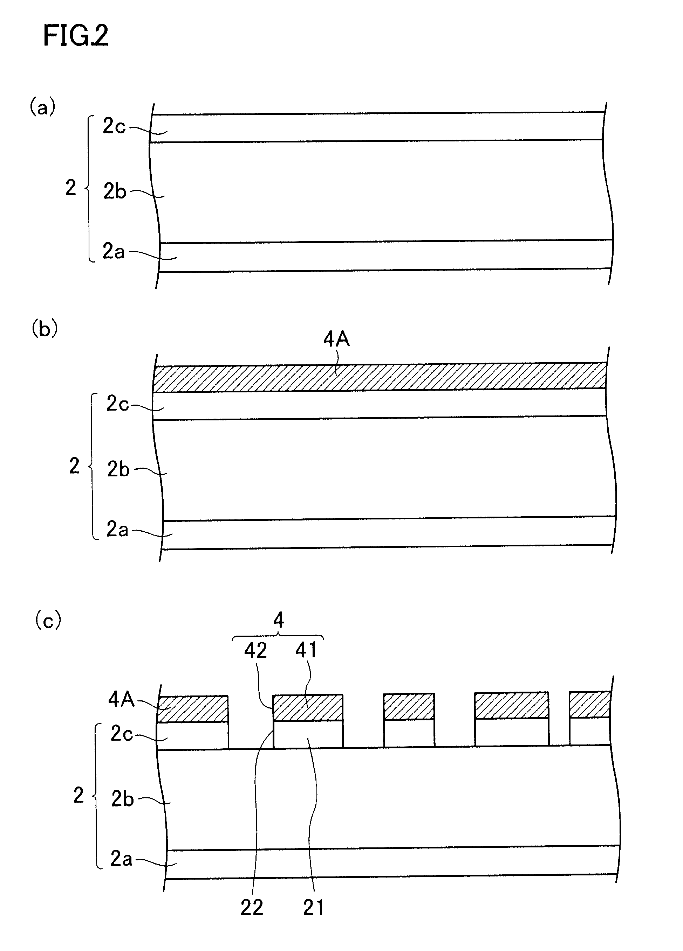

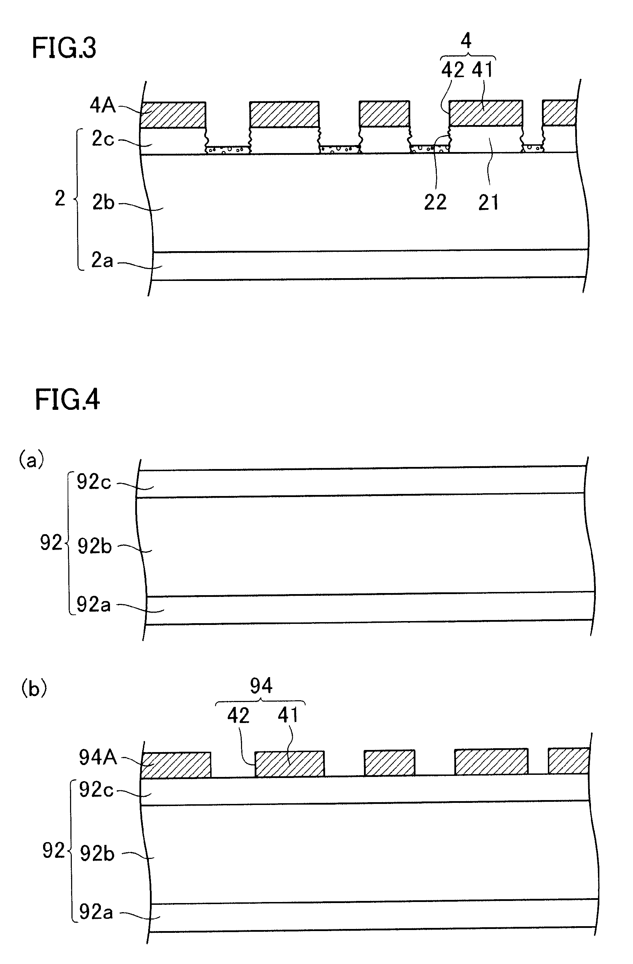

FIG. 1(a) is a perspective view of a battery blister pack when viewed from the front of the battery blister pack. FIG. 1(b) is a cross-sectional view taken along line IB-IB in FIG. 1(a). FIG. 1(c) is a plan view of the battery blister pack when viewed from the back of the battery blister pack. In FIG. 1(a), batteries 1 are not shown. FIGS. 2(a)-2(c) are cross-sectional views showing process steps of forming a barcode 4 by laser marking in the order of fabrication. FIG. 3 is a cross-sectional view showing a state of the barcode 4 when leakage of an electrolyte occurs. FIGS. 4(a) and 4(b) are cross-sectional views showing process steps of forming a barcode 94 by ink printing in the order of fabrication.

A battery blister pack according to this embodiment is configured such that the batteries 1 are housed in space 6 defined by the front surface (i.e., a first surface) of a cardboard 2 and the inner surface of a resin cover (i.e., a cover) 3. The barcode 4 is formed on the back surface (i.e., a second surface) of the cardboard 2. A hanging opening 5 is formed in an upper portion of the cardboard 2. When an electrolyte does not leak from the batteries 1 housed in the space 6 (hereinafter simply referred to as "batteries 1"), a barcode reader recognizes the barcode 4, thereby allowing payment of the batteries 1 at a cash register. On the other hand, if the electrolyte leaks from the batteries 1, the electrolyte leaked from the batteries 1 is absorbed in the cardboard 2, thereby deforming the barcode 4. Specific description will be given below.

The batteries 1 of this embodiment are, for example, manganese dry batteries, alkaline-manganese dry batteries, or nickel-metal hydride storage batteries, and use an aqueous solution as an electrolyte. Thus, the electrolyte leaked from the batteries 1 is hard to dry or evaporate. In addition, the electrolyte of the batteries 1 contains a deliquescent electrolyte material. Specifically, an electrolyte of a manganese dry battery contains zinc chloride, and an electrolyte of an alkaline-manganese dry battery or a nickel-metal hydride storage battery contains alkali metal hydroxide (e.g., potassium hydroxide). Accordingly, the electrolyte material of the electrolyte leaked from the batteries 1 absorbs moisture in the air, thereby reducing drying of the electrolyte leaked from the batteries 1.

If the batteries 1 were batteries using a nonaqueous solvent as an electrolyte (e.g., lithium ion secondary batteries), it is difficult to obtain advantages of this embodiment. This is because the electrolyte is, for example, ethylene carbonate (EC) or dimethyl ether (DME), and thus has high volatility, and the electrolyte material is, for example, lithium phosphate hexafluoride, and thus is not deliquescent.

The cardboard 2 may be a general paperboard (i.e., a card coated with a coating material at one or both surfaces thereof or a white lined chipboard coated with a coating material at one surface) with a thickness of 0.4 mm to 0.7 mm. As illustrated in, for example, FIG. 2(a), the cardboard 2 includes a front surface layer (with a thickness of, for example, 50 $\mu$m) 2a made of bleached pulp or recycled paper with a high degree of whiteness, and an intermediate layer (i.e., an inner layer) (with a thickness of, for example, 0.4 mm) 2b made of recycled paper, and a back surface layer (i.e., a surface layer) (with a thickness of, for example, 50 $\mu$m) 2c made of recycled paper or pulp. As described above, most part of the cardboard 2 is made of the intermediate layer (made of recycled paper) 2b. Thus, the cardboard 2 easily absorbs the electrolyte leaked from the batteries 1.

The resin cover 3 preferably has a water vapor transmission rate of 1.0 ($g/(m^2 \cdot 24hr)$) or more. Thus, moisture in the air penetrates through the resin cover 3 to be supplied to the space 6, thereby reducing drying of the electrolyte leaked from the batteries 1. In addition, the electrolyte leaked from the batteries 1 can be absorbed in the cardboard 2. As the water vapor transmission rate of the resin cover 3 increases, a larger amount of moisture is supplied to the space 6 through the resin cover 3. Accordingly, drying of the electrolyte leaked from the batteries 1 can be reduced. In addition, the electrolyte leaked from the batteries 1 can be absorbed in the cardboard 2. However, if the resin cover 3 has an excessively high water vapor transmission rate, problems, such as rust, on a terminal of the batteries 1 might arise under high temperature and humidity conditions. To prevent this problem, the water vapor transmission rate of the resin cover 3 may be in the range from 1.0 ($g/(m^2 \cdot 24hr)$) to 6.0 ($g/(m^2 \cdot 24hr)$), both inclusive.

The resin cover 3 as described above is fabricated in the following manner. A method of fabricating an example of the resin cover 3 having a thickness of 0.2 mm to 0.6 mm will be described below.

First, a plate made of, for example, polyvinyl chloride resin, polyethylene (PE) resin, or polyethylene terephthalate (PET) resin is uniaxially stretched while being exposed to hot air at a temperature of 200°C to 250°C. In this manner, a resin sheet having a desired thickness is formed. Next, the resin sheet is brought into contact, for 5 seconds to 20 seconds, with a rolling heated roll heated at a temperature of 60°C to 90°C (a heat fixture process). With this process, the resin sheet comes to have a water vapor transmission rate of 1.0 ($g/(m^2 \cdot 24hr)$) or more. Then, the sheet subjected to the heat fixture process is heat pressed into a desired shape. In this manner, the resin cover 3 of this embodiment is fabricated.

The water vapor transmission rate of resin generally depends on the heat processing temperature and the heat processing time of the heat fixture process. Specifically, when the heat processing temperature or the heat processing time in the heat fixture process is reduced, the water vapor transmission rate of resin can be reduced. In addition, the water vapor transmission rate of resin is inversely proportional to the thickness of resin, in general. Accordingly, when the thickness of the resin cover 3 is reduced to a half, the water vapor transmission rate of the resin cover 3 doubles.

The barcode 4 is formed by alternately arranging bars 41 and spaces 42, and indicates information such as production information (e.g., a production date and a production factory) of the batteries 1, distribution information (e.g., a shipping date and a distribution path) of the batteries 1, and sales information (e.g., a display start date and a retail price) of the batteries 1. Such a barcode 4 is formed by laser marking. A method for forming a barcode 4 will be described hereinafter in comparison to a method of forming a barcode 94 by ink printing.

First, a cardboard 2 illustrated in FIG. 2(a) is prepared.

Next, as illustrated in FIG. 2(b), an ink layer 4A is formed on a portion of a back surface layer 2c of the cardboard 2 in which a barcode 4 is to be formed (step (a)).

Subsequently, as illustrated in FIG. 2(c), laser light is applied onto the ink layer 4A (step (b)). Thus, portions of the ink layer 4A irradiated with the laser light are removed, and serve as spaces 42 of the barcode 4. In addition, portions of the back surface layer 2c immediately under the spaces 42 are also removed, thereby forming, in the back surface layer 2c, grooves 22 communicating with the spaces 42. On the other hand, portions of the ink layer 4A not irradiated with the laser light are not removed, and serve as bars 41 of the barcode 4. Portions of the back surface layer 2c immediately under the bars 41 also remain, and serve as underlying portions 21.

In this manner, when the barcode 4 is formed on the back surface of the cardboard 2 by laser marking, the grooves 22 are formed in the back surface layer 2c of the cardboard 2. Accordingly, when an electrolyte leaks from the batteries 1, the electrolyte permeates from the front surface layer 2a to the back surface layer 2c in the cardboard 2, and is held in the grooves 22. That is, formation of the barcode 4 by laser marking can form storage space (i.e., the grooves 22) for the electrolyte around the bars 41 of the barcode 4. In addition, each of the underlying portions 21 is sandwiched between two grooves 22 along the length direction of the barcode 4, and thus, is fragile and has low strength. In view of the above-described configuration, the electrolyte leaked from the batteries 1 macerates the underlying portions 21 (see, FIG. 3 in which the electrolyte stored in the grooves 22 is exaggerated) to change the width of the spaces 42 of the barcode 4.

A barcode reader generally scans the widths of bars and spaces of a barcode, for example, to read information recorded on the barcode. The minimum distance between bars (i.e., a module width) of a barcode is defined by specifications. For example, the module width of a JAN code at 80% of the normal size is 0.264 mm $\pm$ 0.035 mm Accordingly, a barcode reader for scanning a JAN code at 80% of the normal size has a resolution of 0.264 mm $\pm$ 0.035 mm. Accordingly, as long as the module width of a barcode satisfies Equation (1), a barcode reader recognizes the barcode. However, if the module width satisfies Equation (2) or (3), the barcode reader cannot recognize the barcode.

$$(\text{resolution} - \text{error in resolution}) \leq (\text{module width}) \leq (\text{resolution} + \text{error in resolution}): \text{Equation (1)}$$

$$(\text{resolution} - \text{error in resolution}) > (\text{module width}) : \text{Equation (2)}$$

$$(\text{module width}) > (\text{resolution} + \text{error in resolution}) : \text{Equation (3)}$$

As the depth of the grooves 22 increases, the volume of the underlying portions 21 increases. Accordingly, the amount of change in the module width by the electrolyte leaked from the batteries 1 increases. Thus, the depth of the grooves 22 is preferably as large as possible.

However, as the depth of the grooves 22 increases, the intensity of laser light used for forming the barcode 4 increases. Accordingly, if the grooves 22 are excessively deep, the inner surface of the grooves 22 might be burned by laser light, and discolored.

On the other hand, if the grooves 22 are excessively shallow, the amount of change in the module width due to leakage of the electrolyte from the batteries 1 cannot be increased. Accordingly, although the electrolyte leaks from the batteries 1, the barcode 4 cannot be deformed such that the module width satisfies Equation (2) or (3). Thus, disadvantageously, the battery showing leakage of the electrolyte might be sold to customers. In addition, if the grooves 22 are excessively shallow, a sufficient contrast of the bars 41 to the spaces 42 in the barcode 4 cannot be obtained. Thus, in this case, when the electrolyte does not leak from the batteries 1, payment of the batteries 1 cannot be quickly performed at, for example, a cash register. As described above, if the grooves 22 are excessively shallow, problems can arise in both cases of leakage and non-leakage of the electrolyte from the batteries 1.

In view of the foregoing problems, the optimum depth of the grooves 22 (i.e., the height of the underlying portions 21) was examined. Then, it was found that the depth of the grooves 22 needs to be 1/7 or more of an error in resolution, is preferably approximately 1/7 to approximately 1.5 times, both inclusive, as high as an error in resolution, and is more preferably approximately 1/7 or more of, and approximately equal to or less than, an error in resolution. Since the depth of the grooves 22 increases in proportion to the intensity of laser light, the intensity of laser light is adjusted such that the depth of the grooves 22 is 1/7 or more of an error in resolution.

In this manner, formation of the barcode 4 by laser marking can form storage space for the electrolyte around the bars 41 of the barcode 4. In this configuration, when the electrolyte leaks from the batteries 1, the electrolyte permeates from the front surface layer 2a to the back surface layer 2c to be stored in the grooves 22. Thus, the underlying portions 21 macerate, so that the barcode 4 deforms such that the module width thereof satisfies Equation (2) or (3). The thus-deformed barcode 4 cannot be read by the barcode reader, and thus, payment of the batteries 1 cannot be performed at a cash register. Accordingly, it is possible to prevent batteries 1 showing leakage of the electrolyte from being sold to customers. As a result, batteries 1 having guaranteed safety and performance can be provided to customers.

In general, a failure in payment at a cash register due to deformation of a barcode is considered as a problem. To prevent this problem, the barcode is provided on, for example, the outer surface of a product. However, in this embodiment, this failure is utilized to obtain the advantage of preventing batteries 1 without guaranteed safety and performance from being sold to customers.

In addition, if payment of the batteries 1 cannot be performed at a cash register, store staff will become suspicious and carefully observe the blister pack, to find leakage of the electrolyte in the space 6 of the blister pack. In addition, if the store staff examines the lot number of the batteries 1 showing electrolyte leakage, it is possible to estimate when the electrolyte leakage occurred (e.g., during distribution or storage in a store). Thus, reoccurrence of the leakage can be reduced.

On the other hand, the case of forming the barcode 94 by ink printing will be described. First, a cardboard 92 illustrated in FIG. 4(a) is prepared. The cardboard 92 is identical to the cardboard 2 illustrated in FIG. 2(a), and includes a front surface layer 92a, an intermediate layer 92b, and a back surface layer 92c. Next, as illustrated in FIG. 4(b), an ink layer 94A is formed only on a portion of the back surface layer 92c of the cardboard 92 on which bars 41 of a barcode 94 are to be formed. Thus, the barcode 94 is formed on the back surface of the cardboard 92. Formation of the barcode 94 in this manner allows the barcode 94 to be formed without removal of the back surface layer 92c of the cardboard 92. At this time, the ink layer 94A has a thickness of about 1 $\mu$m, and thus, it is difficult to form storage space for the electrolyte around the bars 41 of the barcode 94. Accordingly, even when the electrolyte leaks from the batteries 1, it is difficult to preferentially cause portions of the cardboard 92 in contact with the bars 41 of the barcode 94 to macerate. Thus, it is difficult to deform the barcode 94 such that the module width satisfies Equation (2) or (3). Consequently, a barcode reader can recognize the barcode 94. Accordingly, in the case where the barcode 94 is formed by ink printing, batteries showing electrolyte leakage can be sold to customers. For the reasons described above, to prevent batteries 1 without guaranteed safety and performance from being sold to customers, the barcode 4 is formed by laser marking.

The barcode 4 of this embodiment will now be further described. The position of the barcode 4 on the back surface of the cardboard 2 is not specifically limited. If a perforation line or the like is formed in the cardboard 2, the barcode 4 is formed on the cardboard 2 in such a manner that the barcode 4 does not overlap the perforation line. This is because if the barcode is formed across the perforation line, it might be difficult for a barcode reader to recognize the barcode. As illustrated in FIG. 1(c), the barcode 4 is preferably formed at a position slightly (L ≤ 2 cm) outside the edge of a region (hereinafter simply referred to as a "corresponding region") 7 of the back surface of the cardboard 2 corresponding to a region of the front surface of the cardboard 2 where the batteries 1 are to be disposed. With this configuration, even when the amount of the electrolyte leaked from the batteries 1 is small, the barcode 4 deforms such that the module width satisfies Equation (2) or (3). As a result, it is possible to prevent the batteries 1 showing leakage of the electrolyte from being sold to customers.

In addition, in consideration of a situation in which the blister pack housing the batteries 1 hangs for display, the barcode 4 is preferably formed on a lower portion of the back surface of the cardboard 2. In this situation, the electrolyte leaked from the batteries 1 flows to the lower portion of the cardboard 2 by gravity during the display to deform the barcode 4. Accordingly, as illustrated in FIG. 1(a), in a case where the cardboard 2 has the hanging opening 5, the resin cover 3 is preferably fixed to a portion of the cardboard 2 below the hanging opening 5, and the barcode 4 is preferably located below the corresponding region 7.

As described above, with the blister pack of this embodiment, when the electrolyte does not leak from the batteries 1, payment at a cash register can be quickly finished.

On the other hand, with the blister pack of this embodiment, when the electrolyte leaks from the batteries 1, a barcode reader cannot recognize the barcode 4. Accordingly, it is possible to prevent the batteries 1 without guaranteed safety and performance from being sold to customers.

This embodiment may include the following configurations.

The barcode may be formed on the front surface of the cardboard. In this case, the barcode is preferably located slightly (less than or equal to 2 cm) outside the edge of a region of the cardboard where batteries are to be disposed. With this configuration, even when the amount of the electrolyte leaked from the batteries is small, it is possible to prevent batteries showing electrolyte leakage from being sold to customers. In many cases, messages encouraging buying motivation of customers or performance of the batteries is printed on the front surface of the cardboard. In these cases, a resin cover may be provided to cover the entire front surface of the cardboard so as to protect information on the front surface of the cardboard against dirt or the like. As long as the resin cover is provided to cover the entire front surface of the cardboard, even if the barcode is formed on the front surface of the cardboard, the electrolyte leaked from the batteries hardly causes deformation of the barcode. For this reason, if the resin cover is provided to cover the entire front surface of the cardboard, the barcode is preferably formed on the back surface of the cardboard.

If the barcode is formed on the front surface of the cardboard, it is unnecessary to cause the electrolyte leaked from the batteries to permeate through the cardboard along the thickness direction of the cardboard. Accordingly, a layer including no underlying portion (which is, for example, the back surface layer in this case) may not contain recycled paper.

In a case where the barcode is formed on the back surface of the cardboard, the content of recycled paper in the back surface layer is preferably higher than that in each of the intermediate layer and the front surface layer. In this configuration, the back surface layer more easily swells in the electrolyte than the intermediate layer and the front surface layer. Accordingly, when the electrolyte leaks from the battery, the underlying portion thereof easily macerates in the electrolyte, and thus, the barcode easily deforms. In a case where the barcode is formed on the front surface layer of the cardboard, as long as the content of the recycled paper in the front surface layer is higher than that in each of the intermediate layer and the back surface layer, similar advantages can be obtained.

The barcode may be formed on the back or front surface of the cardboard after a resin pack is fixed to the front surface of the cardboard, or before the resin pack is fixed to the front surface of the cardboard.

Grooves only need to be formed to have a desired depth (e.g., 1/7 or more of an error in resolution). Accordingly, for example, in a case where the barcode is formed on the back surface of the cardboard, the grooves may penetrate through not only the back surface layer but also the intermediate layer. The depth of the grooves can be adjusted by changing the intensity of laser light. This configuration is applicable to the case of forming the barcode on the front surface of the cardboard.

The size of openings of the grooves is not limited to substantially the same size as the distance (i.e., the width of spaces of the barcode) between bars of the barcode, and may be smaller or larger than the distance between the bars of the barcode. However, in consideration of easiness of formation of the barcode and formation of storage space for the electrolyte, the size of openings of the grooves is preferably substantially the same as the distance between the bars of the barcode. This configuration is also applicable to the case of forming the barcode on the front surface of the cardboard.

The resin cover may be formed to cover the entire front surface of the cardboard or cover only a portion of the cardboard where batteries are disposed.

The water vapor transmission rate of the resin cover may be less than 1.0 $(g/(m^2 \cdot 24hr))$. The cover is not necessarily made of resin. However, if the water vapor transmission rate of the resin cover is higher than or equal to 1.0 $(g/(m^2 \cdot 24hr))$, drying of the electrolyte leaked from the batteries can be prevented, and the electrolyte leaked from the batteries can be absorbed in the cardboard. Thus, the cover is preferably made of resin having a water vapor transmission rate higher than or equal to 1.0 $(g/(m^2 \cdot 24hr))$.

The number of layers constituting the cardboard is not limited to three. The cardboard does not need to have a hanging opening.

The number of batteries housed in the blister pack is not limited to four. The size of batteries housed in the blister pack is not specifically limited.

EXAMPLES

<Example A>

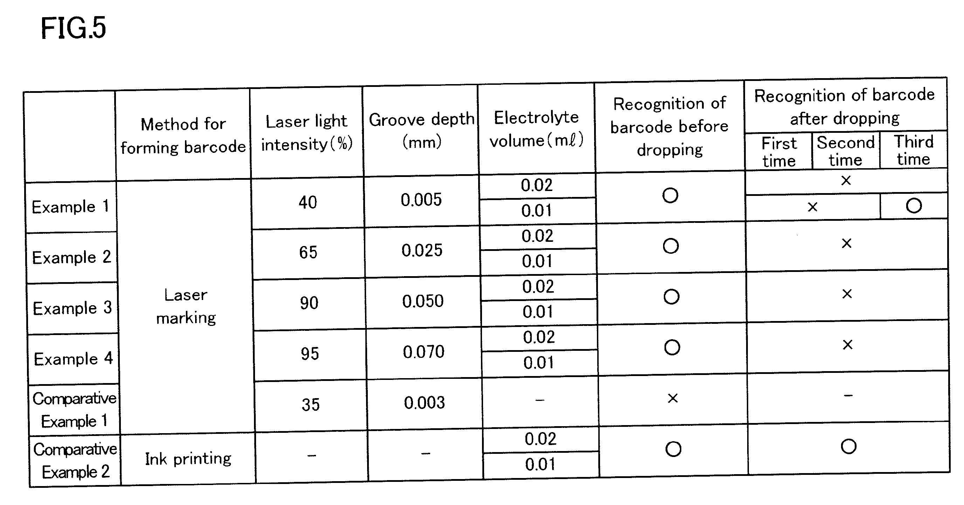

In Example A, experiments were conducted to find the optimum depth of the grooves. Specifically, a situation in which an electrolyte leaks from a battery was intentionally created by dropping 0.02 ml (corresponding to about 0.5% of the total volume of an electrolyte contained in an AA alkaline-manganese dry battery) of an electrolyte onto a region of a cardboard where batteries were to be disposed, to determine whether or not a barcode reader recognizes a barcode. FIG. 5 shows the results.

(Example 1)

First, a cardboard including a front surface layer (with a thickness of about 50 $\mu$m) made of bleached pulp, an intermediate layer (with a thickness of about 0.4 mm) made of recycled paper, and a back surface layer (with a thickness of about 50 μm) made of pulp was prepared. The cardboard had a hanging opening.

Next, an ink layer was formed on a portion of the back surface of the cardboard located between the hanging opening and the corresponding region. Thereafter, the ink layer was irradiated with light output from a $CO_2$ laser (produced by SUNX limited, LP-420S9U), thereby forming a barcode (i.e., a JAN code at 80% of the normal size) on the back surface of the cardboard. The intensity of the laser light at this time was 40% of the maximum output of the $CO_2$ laser, and the depth of the grooves was 0.005 mm.

Then, the barcode was scanned with a barcode reader (produced by Panasonic Corporation, JT-H220HT-6) with the barcode reader located at a distance of 20 cm from the barcode, and it was confirmed that barcode was recognized.

Thereafter, 32%, by weight, of a potassium hydroxide aqueous solution was dropped onto a portion of the front surface of the cardboard where batteries were to be disposed. Subsequently, the cardboard was hanged in an environmental test tank (temperature: 45 ± 2°C, and relative humidity: 90 ± 5%RH) for three days.

The cardboard was then taken out of the environmental test tank. Then, it was found that the barcode was wet by the electrolyte. The barcode was scanned three times with the barcode reader located at a distance of 20 cm from the barcode, but information recorded on the barcode could not be read once. When the amount of the dropped electrolyte was reduced to a half, the barcode was recognized at the third time, but could not be recognized any more.

(Example 2)

Recognition of the barcode was examined in the same manner as in Example 1 except that the intensity of laser light was 65% of the maximum output of the $CO_2$ laser used in Example 1 and the grooves had a depth of 0.025 mm. In this example, the barcode was recognized before the electrolyte was dropped. However, after the electrolyte was dropped and the barcode was stored in an environmental test tank for three days, the barcode was not recognized. Even when the amount of the dropped electrolyte was reduced to a half, the barcode was not recognized.

(Example 3)

Recognition of the barcode was examined in the same manner as in Example 1 except that the intensity of laser light was 90% of the maximum output of the $CO_2$ laser used in Example 1 and the grooves had a depth of 0.050 mm. In this example, the same results as those in Example 2 were obtained.

(Example 4)

Recognition of the barcode was examined in the same manner as in Example 1 except that the intensity of laser light was 95% of the maximum output of the $CO_2$ laser used in Example 1 and the grooves had a depth of 0.070 mm. In this example, the same results as those in Example 2 were obtained. However, the color of the inner surfaces of the grooves was changed to brown. This phenomenon is considered to be because the intensity of the laser light was too high.

(Comparative Example 1)

Recognition of the barcode was examined in the same manner as in Example 1 except that the intensity of laser light was 35% of the maximum output of the $CO_2$ laser used in Example 1 and the grooves had a depth of 0.003 mm. Then, the barcode was not recognized before the electrolyte was dropped. This phenomenon is considered to be because the contrast of the bars to the spaces in the barcode was insufficient.

(Comparative Example 2)

Recognition of the barcode was examined in the same manner as in Example 1 except that a barcode (with a thickness of 0.002 mm) was formed by ink printing. Then, the barcode was recognized after the electrolyte was dropped and the barcode was stored in an environmental test tank for three days.

From the foregoing results, the depth of the grooves only needs to be 0.005 mm or more, and is preferably in the range from 0.005 mm to 0.050 mm , both inclusive. In Example A, since the JAN code at 80% of the normal size was formed, the allowable error in the module width was 0.035 mm. In consideration of this allowable error, the depth of the grooves only needs to be 1/7 or more of the allowable error in the module width, and is preferably in the range from 1/7 to 1.5, both inclusive, of the allowable error in the module width. In other words, the depth of the grooves only needs to be 1/7 or more of an error in resolution of a barcode reader, and is preferably in the range from 1/7 to 1.5, both inclusive, of an error in resolution of the barcode reader.

<Example B>

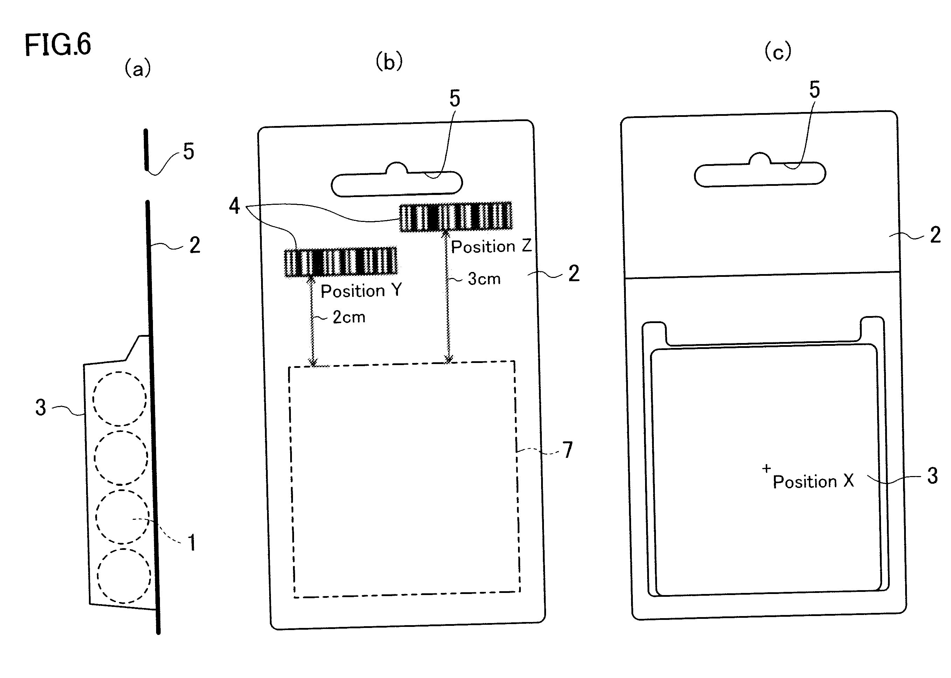

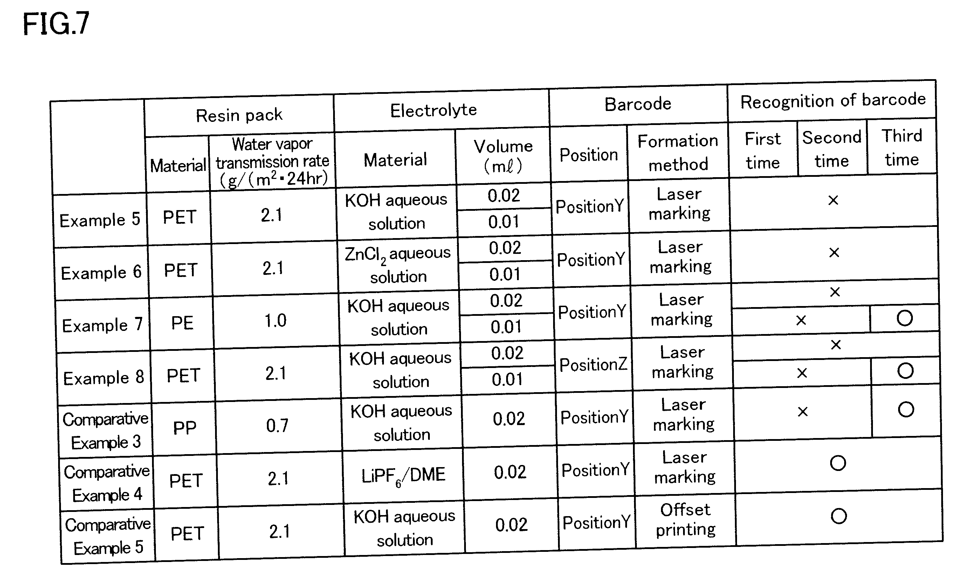

In Example B, experiments were conducted to find the optimum water vapor transmission rate of the resin cover. Specifically, a blister pack (designed to house four AA alkaline-manganese dry batteries) illustrated in FIG. 6 was fabricated, and a situation in which an electrolyte leaks from batteries 1 was intentionally created by dropping 0.02 ml of an electrolyte, instead of housing the batteries 1 in space 6 of the blister pack, to determine whether or not a barcode reader recognizes the barcode. FIG. 7 shows the results.

(Example 5)

First, a cardboard 2 and a resin cover 3 were prepared. As the cardboard 2, the cardboard of Example 1 was prepared. As the resin cover 3, a resin cover having a thickness of 0.3 mm, made of PET resin, and has a water vapor transmission rate of 2.1 (g/(m$^2$·24hr)) was prepared.

Next, an ink layer with a thickness of about 1 $\mu$m was formed on a portion of the back surface of the cardboard 2 where the barcode 4 was to be formed. Thereafter, a barcode 4 was formed at a position Y shown in FIG. 6(b) using a CO$_2$ laser (i.e., the CO$_2$ laser used in Example 1). The position Y is located below the hanging opening 5, and at a distance of 2 cm away from the edge of the corresponding region 7.

Then, 32%, by mass, of a potassium hydroxide aqueous solution was dropped onto a predetermined portion (i.e., a position X shown in FIG. 6(c)) of the cardboard 2.

Thereafter, the cardboard 2 and the resin cover 3 were joined together with a hotmelt adhesive. In this manner, a blister pack of Example 5 was formed. Subsequently, the blister pack was hanged in an environmental test tank (i.e., the environmental test tank used in Example 1) for three days.

The blister pack was then taken out of the environmental test tank Then, it was found that the barcode 4 was wet by the electrolyte. The barcode 4 was scanned three times with a barcode reader (i.e., the barcode reader used in Example 1) with the barcode reader located at a distance of 20 cm from the barcode 4, but information recorded on the barcode 4 could not be read once. Even when the amount of the dropped electrolyte was reduced to a half, information recorded on the barcode 4 could not be read.

(Example 6)

Recognition of the barcode 4 by a barcode reader was examined in the same manner as in Example 5 except for using 25%, by mass, of a zinc chloride aqueous solution as an electrolyte. Then, similar results as those in Example 5 were obtained.

(Example 7)

Recognition of the barcode 4 by a barcode reader was examined in the same manner as in Example 5 except that the resin cover 3 was made of polyethylene and had a water vapor transmission rate of 1.0 (g/(m$^2$·24hr)). Then, it was found that the barcode 4 was wet by the electrolyte, and information recorded on the barcode 4 could not be read once. When the amount of dropped electrolyte was reduced to a half, the barcode 4 was recognized at the third time, but could not be recognized any more.

(Example 8)

Recognition of the barcode 4 by a barcode reader was examined in the same manner as in Example 5 except that the barcode 4 was formed at a position Z shown in FIG. 6(b). The position Z was located below the hanging opening 5, and at a distance of 3 cm away from the edge of the corresponding region 7. In Example 8, similar results as those in Example 7 were obtained.

(Comparative Example 3)

Recognition of the barcode 4 by a barcode reader was examined in the same manner as in Example 5 except that the resin cover 3 was made of polypropylene (PP) and had a water vapor transmission rate of 0.7 (g/(m$^2$·24hr)). Then, the barcode 4 was hardly wet by the electrolyte. The barcode reader recognized the barcode 4 at the third time.

(Comparative Example 4)

Recognition of the barcode 4 by a barcode reader was examined in the same manner as in Example 5 except that the electrolyte was a dimethyl ether (DME) solution (with a concentration of 0.9 M, an electrolyte of a lithium ion secondary battery) using lithium phosphate hexafluoride as a solute. Then, it was found that the barcode 4 was hardly wet by the electrolyte. It was also found that the barcode reader recognized the barcode 4 at the first time.

(Comparative Example 5)

Recognition of the barcode 4 by a barcode reader was examined in the same manner as in Example 5 except that the barcode 4 was formed by offset printing. Then, similar results as those in Comparative Example 4 were obtained.
From the foregoing results, the water vapor transmission rate of the resin cover 3 is preferably 1.0 (g/(m$^2$·24hr)) or more.
In Examples 1-8, the barcode was formed on a portion of the back surface of the cardboard located between the hanging opening and the corresponding region. The inventors of the present invention believe that if the barcode is formed below the corresponding region on the back surface of the cardboard, deformation of the barcode by the electrolyte can be further increased.

INDUSTRIAL APPLICABILITY

As described above, the present invention is useful for a blister pack for housing a battery (e.g., a manganese dry battery, an alkaline-manganese dry battery, or a nickel-metal hydride storage battery) using an aqueous solution for an electrolyte.

DESCRIPTION OF REFERENCE CHARACTERS

1    battery
2    cardboard
3    resin cover
4    barcode
4A   ink layer
5    hanging opening
6    space
10   electrolyte
21   underlying portion
22   groove
41   bar
42   space

**Claims**

1.  A battery blister pack, comprising:

    a cardboard having a first surface; and
    a cover fixed to the first surface of the cardboard, wherein
    the battery blister pack is configured to house a battery using an aqueous solution as an electrolyte in space defined by the first surface of the cardboard and an inner surface of the cover,
    a barcode is formed on the cardboard by laser marking,
    a groove communicating with a space in the barcode is formed in the cardboard, and
    the groove has a depth which is 1/7 or more of an error in resolution of a barcode reader.

2.  The battery blister pack of claim 1, wherein the depth of the groove is 1.5 times or less as large as an error in resolution of the barcode reader.

3.  The battery blister pack of claim 1, wherein the cardboard includes an inner layer and a surface layer in which the groove is formed, and
the surface layer more easily swells in the electrolyte than the inner layer.

4. The battery blister pack of claim 1, wherein the cover is made of resin, and
the cover has a water vapor transmission rate of 1.0 (g/(m$^2$·24hr)) or more.

5. The battery blister pack of claim 1, wherein the barcode is formed on a second surface of the cardboard opposite to the first surface of the cardboard.

6. The battery blister pack of claim 5, wherein the cardboard includes a layer made of recycled paper.

7. The battery blister pack of claim 1, wherein the barcode is located at a distance of 2 cm or less outside from an edge of a region of the cardboard where the battery is disposed.

8. The battery blister pack of claim 1, wherein the cardboard has a hanging opening, and
the cover is fixed to a portion of the cardboard located below the hanging opening and above the barcode.

9. A method for fabricating a battery blister pack configured to house a battery using an aqueous solution as an electrolyte in space defined by a first surface of a cardboard and an inner surface of a cover fixed to the first surface of the cardboard, the method comprising the steps of:

(a) forming an ink layer on a portion of the cardboard; and
(b) removing part of the ink layer by laser marking, thereby forming a barcode, wherein in step (b),

a groove communicating with a space in the barcode is formed in the cardboard, and
the groove has a depth which is 1/7 or more of an error in resolution of a barcode reader.

FIG.1

(a)

IB

5

2

3

IB

(b)

5

2

3

6

1

(c)

5

2

7

L

4

IIC          IIC

# FIG.2

(a)

(b)

(c)

FIG.3

FIG.4

(a)

(b)

# FIG.5

| | Method for forming barcode | Laser light intensity(%) | Groove depth (mm) | Electrolyte volume(ml) | Recognition of barcode before dropping | Recognition of barcode after dropping | | |
|---|---|---|---|---|---|---|---|---|
| | | | | | | First time | Second time | Third time |
| Example 1 | Laser marking | 40 | 0.005 | 0.02 | ○ | × | | |
| | | | | 0.01 | | × | ○ | |
| Example 2 | | 65 | 0.025 | 0.02 | ○ | × | | |
| | | | | 0.01 | | | | |
| Example 3 | | 90 | 0.050 | 0.02 | ○ | × | | |
| | | | | 0.01 | | | | |
| Example 4 | | 95 | 0.070 | 0.02 | ○ | × | | |
| | | | | 0.01 | | | | |
| Comparative Example 1 | | 35 | 0.003 | – | × | – | | |
| Comparative Example 2 | Ink printing | – | – | 0.02 | ○ | ○ | | |
| | | | | 0.01 | | | | |

EP 2 487 119 A1

FIG.6

# FIG.7

| | Resin pack | | Electrolyte | | Barcode | | Recognition of barcode | | |
|---|---|---|---|---|---|---|---|---|---|
| | Material | Water vapor transmission rate $(g/(m^2 \cdot 24hr)$ | Material | Volume $(m\ell)$ | Position | Formation method | First time | Second time | Third time |
| Example 5 | PET | 2.1 | KOH aqueous solution | 0.02 / 0.01 | PositionY | Laser marking | × | | |
| Example 6 | PET | 2.1 | ZnCl₂ aqueous solution | 0.02 / 0.01 | PositionY | Laser marking | × | | |
| Example 7 | PE | 1.0 | KOH aqueous solution | 0.02 / 0.01 | PositionY | Laser marking | × | × | ○ |
| Example 8 | PET | 2.1 | KOH aqueous solution | 0.02 / 0.01 | PositionZ | Laser marking | × | × | ○ |
| Comparative Example 3 | PP | 0.7 | KOH aqueous solution | 0.02 | PositionY | Laser marking | × | ○ | |
| Comparative Example 4 | PET | 2.1 | LiPF₆/DME | 0.02 | PositionY | Laser marking | ○ | | |
| Comparative Example 5 | PET | 2.1 | KOH aqueous solution | 0.02 | PositionY | Offset printing | ○ | | |

EP 2 487 119 A1

<table>
<tr><td colspan="2" align="center">**INTERNATIONAL SEARCH REPORT**</td><td colspan="2">International application No.<br>PCT/JP2010/001780</td></tr>
</table>

**A. CLASSIFICATION OF SUBJECT MATTER**
*B65D75/36*(2006.01)i, *G06K19/06*(2006.01)i, *G09F3/00*(2006.01)n

According to International Patent Classification (IPC) or to both national classification and IPC

**B. FIELDS SEARCHED**

Minimum documentation searched (classification system followed by classification symbols)
B65D75/36, G06K19/06, G09F3/00

Documentation searched other than minimum documentation to the extent that such documents are included in the fields searched
Jitsuyo Shinan Koho        1922-1996    Jitsuyo Shinan Toroku Koho    1996-2010
Kokai Jitsuyo Shinan Koho  1971-2010    Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2005-280756 A  (Matsushita Electric Industrial Co., Ltd.),<br>13 October 2005 (13.10.2005),<br>paragraphs [0017] to [0019], [0024];<br>fig. 1 to 2<br>& US 2006/0207909 A1     & EP 1640286 A1<br>& WO 2005/092737 A1 | 1-6,9<br>7-8 |
| Y<br>A | JP 10-138641 A  (Sony Corp.),<br>26 May 1998 (26.05.1998),<br>paragraphs [0014] to [0023]; fig. 1 to 3<br>(Family: none) | 1-6,9<br>7-8 |
| Y<br>A | JP 07-257640 A  (Dainippon Printing Co., Ltd.),<br>09 October 1995 (09.10.1995),<br>paragraphs [0001], [0075] to [0085]; fig. 1<br>(Family: none) | 4<br>1-3,5-9 |

[X] Further documents are listed in the continuation of Box C.        [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07 April, 2010 (07.04.10) | Date of mailing of the international search report<br>20 April, 2010 (20.04.10) |
|---|---|
| Name and mailing address of the ISA/<br>Japanese Patent Office | Authorized officer |
| Facsimile No. | Telephone No. |

Form PCT/ISA/210 (second sheet) (July 2009)

| INTERNATIONAL SEARCH REPORT | International application No. |
|---|---|
| | PCT/JP2010/001780 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 04-294386 A  (Yugen Kaisha Rabo Nakayama), 19 October 1992 (19.10.1992), entire text; all drawings (Family: none) | 1-9 |
| A | JP 04-306692 A  (Matsushita Electric Industrial Co., Ltd.), 29 October 1992 (29.10.1992), entire text; all drawings (Family: none) | 1-9 |
| A | Microfilm of the specification and drawings annexed to the request of Japanese Utility Model Application No. 189975/1981(Laid-open No. 094268/1983) (Matsushita Electric Industrial Co., Ltd.), 25 June 1983 (25.06.1983), entire text; all drawings (Family: none) | 1-9 |

Form PCT/ISA/210 (continuation of second sheet) (July 2009)

**EP 2 487 119 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10194244 A